Europäisches Patentamt

European Patent Office

Office européen des brevets

(19)

(11) **EP 1 492 129 A1**

(12) **EUROPEAN PATENT APPLICATION**
published in accordance with Art. 158(3) EPC

(43) Date of publication:
**29.12.2004 Bulletin 2004/53**

(51) Int Cl.⁷: **G21K 7/00**, G01N 23/04

(21) Application number: **03712806.3**

(86) International application number:
**PCT/JP2003/003452**

(22) Date of filing: **20.03.2003**

(87) International publication number:
**WO 2003/081605 (02.10.2003 Gazette 2003/40)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **22.03.2002 JP 2002080947**

(71) Applicant: **Hamamatsu Photonics K.K.**
**Shizuoka-ken 435-8558 (JP)**

(72) Inventors:
• **OHBA, Akira, Hamamatsu Photonics K.K.**
**Hamamatsu-shi, Shizuoka 435-8558 (JP)**
• **SUGIYAMA, Masaru, Hamamatsu Photonics K.K.**
**Hamamatsu-shi, Shizuoka 435-8558 (JP)**
• **ONODA, Shinobu, Hamamatsu Photonics K.K.**
**Hamamatsu-shi, Shizuoka 435-8558 (JP)**

(74) Representative: **Frost, Alex John et al**
**Boult Wade Tennant,**
**Verulam Gardens**
**70 Gray's Inn Road**
**London WC1X 8BT (GB)**

(54) **X-RAY IMAGE MAGNIFYING DEVICE**

(57)     The X-ray image magnifying device according to the present invention is provided with an illumination optical system 3 for irradiating the X-ray emitted from an X-ray source 1 to a sample 4, an objective lens 5 configured by an oblique incidence mirror composed of a rotary hyperboloidal surface and a rotary ellipsoidal surface for magnifying and focusing the X-ray penetrating through the sample 4 onto a predetermined position, an X-ray image detecting means 6 for detecting the X-ray image focused, and a focusing magnification adjusting means for adjusting the focusing magnification of the X-ray image by moving at least one of the X-ray image detecting means 6, the sample 4 and the illumination optical system 3 along the optical axis direction. Thereby, in the X-ray image magnifying device using the grazing incidence mirror as the objective lens, the focusing magnification can be changed without exchanging the grazing incidence mirror.

**Fig.3**

## Description

## Field of the Art

The present invention relates to an X-ray image magnifying device capable of observing a sample by using an X-ray.

## Background Art

An X-ray microscope which can observe a sample without treating the sample is conventionally used in a vital observation and a semiconductor inspection or the like. For instance, in an image forming X-ray microscope, a sample is irradiated with an X-ray, and the X-ray image is enlarged and formed on a detector by an image forming optical system to observe the sample.

A zone plate optical system (Japanese Published Unexamined Patent Application H9-251100 etc.) using a diffraction, and a Schwarzschild optical system (Japanese Published Unexamined Patent Application No. H6-300900 etc.) or the like obtained by coating multilayers having high reflectivity to an X-ray having a specific wavelength are used for the image forming optical system of the image forming X-ray microscope.

## Disclosure of the Invention

Japanese Published Unexamined Patent Application No. H9-251100 discloses a soft X-ray microscope focusing by moving a detector in an optical axis direction and changing the distance between the detector and a zone plate type objective lens. However, the technique uses a zone plate having a high wavelength selectivity to change the focusing magnification, and thereby it is necessary to change the wavelength slightly. The loss of the light amount of the X-ray is large, monochromaticity is required, and it is necessary to use the synchrotron radiation. Additionally, it is necessary to move the sample and the detector when observing by using the different wavelength at the same magnification. Even when the Schwarzschild type objective lens is used, the wavelength for observing is decided.

Japanese Published Unexamined Patent Application No. H6-300900 discloses a technique wherein after the image magnified by a Schwarzschild type multilayer mirror is transformed to the visible light by a fluorescent screen or the like, the image after being transformed is observed while the magnification is changed by a light microscope provided with a plurality of lenses from low magnification to high magnification. Since the technique uses the multilayer mirror, the wavelength which can be observed is limited, and transformation of the image to a visible light once reduces work efficiency.

Therefore, a grazing incidence mirror which has high use efficiency and has no wavelength selectivity is suitable for an optical element in a laboratory scale X-ray microscope.

The present invention has been made to solve the above problems. It is an object of the present invention to provide an X-ray image magnifying device capable of changing an focusing magnification by using a grazing incidence mirror having no wavelength selectivity.

In order to achieve the above object, the X-ray image magnifying device according to the present invention comprises:

an illumination optical system for irradiating the X-ray emitted from an X-ray source to a sample;
an objective lens configured by a grazing incidence mirror composed of a rotary hyperboloidal surface and a rotary ellipsoidal surface for magnifying and focusing the X-ray penetrating through the sample onto a predetermined position;
an X-ray image detecting means for detecting the X-ray image focused by the objective lens; and
a focusing magnification adjusting means for adjusting the focusing magnification of the X-ray image by moving at least one of the X-ray image detecting means, the sample and the illumination optical system along the optical axis direction.

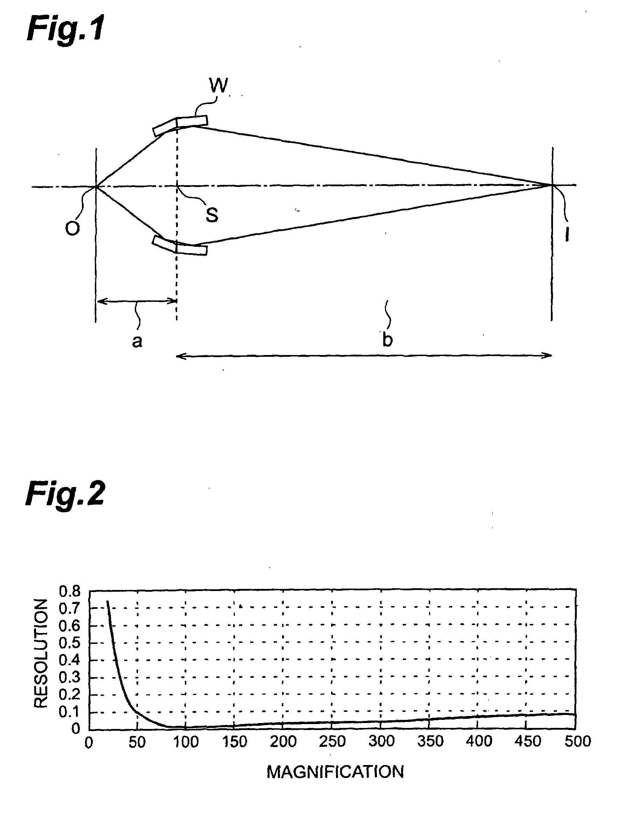

Herein, the principle of the present invention will be described with reference to Fig. 1. The position on which a sample is placed is set to an object point O. A grazing incidence mirror W is composed of a rotary hyperboloidal surface and a rotary ellipsoidal surface of an objective lens. The position of the joining part and the position of the image-forming plane are respectively set to S and I. The distance between the object point O and the joining part S of the grazing incidence mirror is set to a. The distance between the position S and the position I is set to b. When the focal distance of the grazing incidence mirror and the focusing magnification are set to f and M, the following expressions hold.

$$(1/a) + (1/b) = 1/f \qquad \text{expression (1)}$$

$$b = aM \qquad \text{expression (2)}$$

Originally, the distances a and b are fixed values in the design of the grazing incidence mirror, and thereby the magnification M also becomes a fixed value. However, ray tracing simulation confirmed that the image can be formed even if the distances a and b are adjusted and the focusing magnification M is changed though the resolution is worsened.

As one example, Fig. 2 shows the change (simulation result) in resolution when the magnification M is changed in the grazing incidence mirror designed as a distance a of 20mm, a distance b of 2000mm, and a magnification M of 100). Fig. 2 shows that the grazing incidence mirror has the highest resolution when the design magnification M is 100, and the image is formed though the grazing incidence mirror has low resolution even when the design magnification M is other magnifications. The mirror can be used for magnifications of 60 to 300 when the resolution is permitted up to 0.05μm. At this time, the distance a is within the range of 20.1 to 19.9mm, and the distance b is within the range of 1200mm to 6000mm. Since high-resolution is not really required when the sample exploration is a main objective in observation on the side of low magnification, even a resolution of about 30 times can sufficiently be used.

Therefore, if the distances a and b can be changed within the range mentioned above, the focusing magnification can be changed without exchanging the grazing incidence mirror.

The X-ray image magnifying device of the present invention wherein the grazing incidence mirror is used as the objective lens has the following advantages in comparison with conventional examples using the zone plate optical system and the Schwarzschild type multilayer mirror.

That is, it is not necessary to make the X-ray illuminated with a single wavelength, and the configuration of the illumination optical system is simple in comparison with the conventional example using the zone plate optical system as the objective lens. The values of the distances a and b are not changed since the value f is not changed if the X-ray wavelength is changed at the same magnification, and the use efficiency of the X-ray is high. The wavelength which can be observed is not limited to the single wavelength in comparison with the conventional example using the Schwarzschild type multilayer mirror as the objective lens, and the sample can be observed in a broad wavelength region.

The X-ray image magnifying device according to the present invention, may further comprise; a light irradiation means for irradiating the sample with a visible light or an ultraviolet light; and a light detecting means for detecting the image by the light which penetrates through the sample and is reflected by the objective lens. Thus, the X-ray image magnifying device has an advantage in that it is easy to treat and observe the device in comparison with using only the X-ray, and thereby radiation damage of the sample is reduced.

**Brief Description of the Drawings**

Fig. 1 is an illustration for explaining the principle of the present invention.
Fig. 2 shows the change in resolution when the magnification is changed in a grazing incidence mirror.
Fig. 3 is a sectional view showing the schematic configuration of an X-ray microscope according to a first embodiment.

Fig. 4 shows an example of a moving mechanism of an X-ray detector.
Fig. 5 is an illustration for explaining an operation when observing at a low magnification.
Fig. 6 is an illustration for explaining an operation when observing at a high magnification.
Fig. 7 is a sectional view showing the schematic configuration of an X-ray microscope according to a second embodiment.
Fig. 8 shows the arrangement of an illumination optical system.

**Best Mode for Carrying out the Invention**

Hereinafter, the preferred embodiment of the present invention will be described in detail with reference to the drawings. In the description of the drawings, identical components are designated by the same reference numerals, and overlapping description is omitted. The measurement ratio of the drawings does not necessarily correspond to that of the description.

[First embodiment]

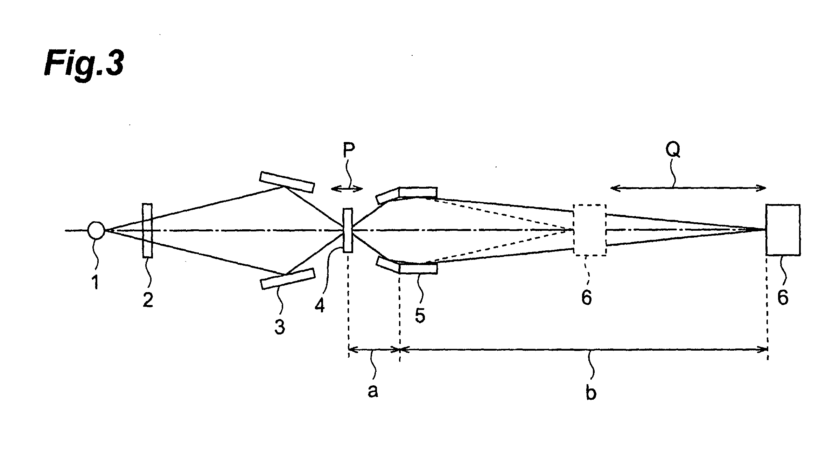

Fig. 3 is a sectional view showing the schematic configuration of an X-ray microscope according to the first embodiment of the present invention. A device shown in Fig. 1 comprises an X-ray source 1, a filter 2, a grazing incidence mirror 3 for illumination which utilizes total reflection and has the form of a rotary ellipsoidal surface, a sample 4, a grazing incidence mirror 5 composed of a rotary hyperboloidal surface and a rotary ellipsoidal surface of an objective lens, an X-ray detector 6. For instance, a gas puff type plasma X-ray source is used as the X-ray source 1.

The operation of the X-ray microscope according to the first embodiment will be explained with reference to Fig. 3. The X-ray generated from the gas puff type plasma X-ray source 1 is limited to the wavelength area of the observed X-ray by the filter 2, and the sample 4 is irradiated with a limited X-ray by the grazing incidence mirror 3 for illumination. The X-ray penetrating through the sample 4 is made incident on the grazing incidence mirror 5, and the X-ray image magnified is detected on the light sensitive surface of the X-ray detector 6. When the magnification rate is changed, the distance b between the grazing incidence mirror 5 and the detector 6 is adjusted by moving the X-ray detector 6 along the optical axis direction of an arrow Q so as to attain a desired magnification. The sample 4 is then moved in the optical axis direction of an arrow P by a moving mechanism (not shown) so as to be focused while viewing the image detected by the X-ray detector 6, and the distance a between the sample 4 and the grazing incidence mirror 5 is adjusted. The X-ray detector 6 may be moved so as to be focused after the sample 4 is moved. Finally, the grazing incidence mirror 3 for illumination is moved so as to obtain the optimum illumination.

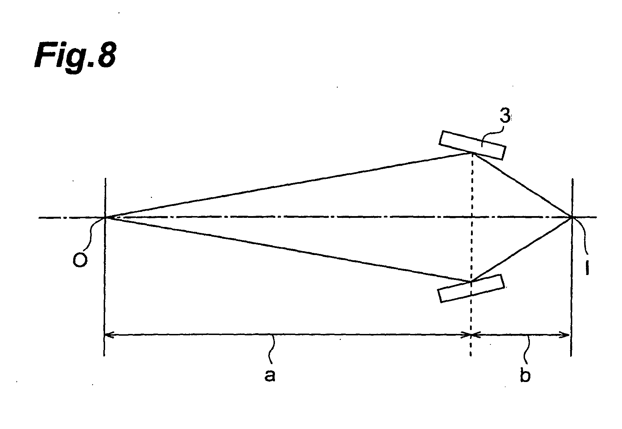

Fig. 8 shows the arrangement of an illumination optical system. "O" and "I" are respectively a light source and a light focus point (the image of the light source O), and the expression (1) holds. If the position of the sample 4 shown in Fig. 3 is decided, the grazing incidence mirror 3 for illumination is moved such that the position of the sample 4 corresponds to that of the light focus point I.

At this time, the sample 4 shown in Fig. 3 and the grazing incidence mirror 3 for illumination can be moved several millimeters along the optical axis direction of the arrow P, and it is necessary that the X-ray detector 6 has a mechanism capable of being moved several meters. When a soft X-ray having a relatively long wavelength of 1nm or more is used as the X-ray, the X-ray having the wavelength of the area is markedly absorbed in air, and thereby it is necessary to keep the optical path thereof a vacuum. The grazing incidence mirror 3, the sample 4, the grazing incidence mirror 5, and the X-ray detector 6 are set in a vacuum vessel. Therefore, the work efficiency is improved if the grazing incidence mirror 3, the sample 4, the grazing incidence mirror 5 and the X-ray detector 6 can be moved from the outside of the vacuum vessel. Only the sample 4 can be set in air.

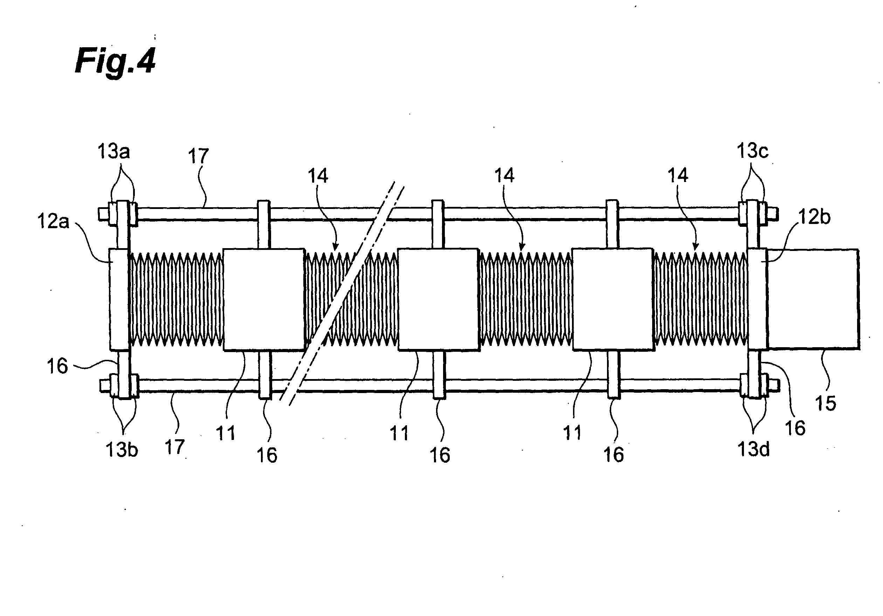

Since the moving ranges of the sample 4, the grazing incidence mirror 3, and the grazing incidence mirror 5 are several millimeters and small, the moving mechanisms can be composed of a commercially available moving stage and a manipulator or the like. On the other hand, the moving mechanism of the X-ray detector 6 can be moved in a large range of about several meters by using vacuum bellows 14 shown in Fig. 4. The vacuum bellows 14 are connected by vacuum flanges 12a, 12b and vacuum pipes 11. The vacuum flange 12a is connected to the vacuum pipe having the grazing incidence mirror 5 shown in Fig. 3, and the vacuum flange 12b is connected to the vacuum flange 15 connected to the X-ray detector 6. Supports 16 are respectively attached to the vacuum pipes 11 and the vacuum flanges 12a and 12b, and holes penetrated by a bolt 17 are respectively formed on the end of the supports. Nuts 13a-13d for fixing the bolt 17 in the longitudinal direction are mounted on the ends of the supports of the vacuum flanges 12a and 12b. When the position of the X-ray detector 6 is adjusted, the length of the vacuum bellows 14 is fixed by loosening the nuts 13c and 13d, expanding and contracting the vacuum bellows 14 to adjust to a target length, and tightening the nuts 13c and 13d again.

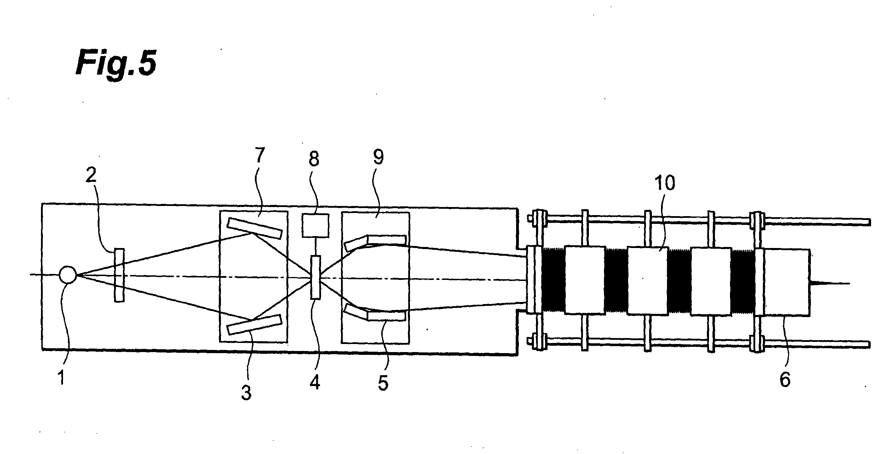

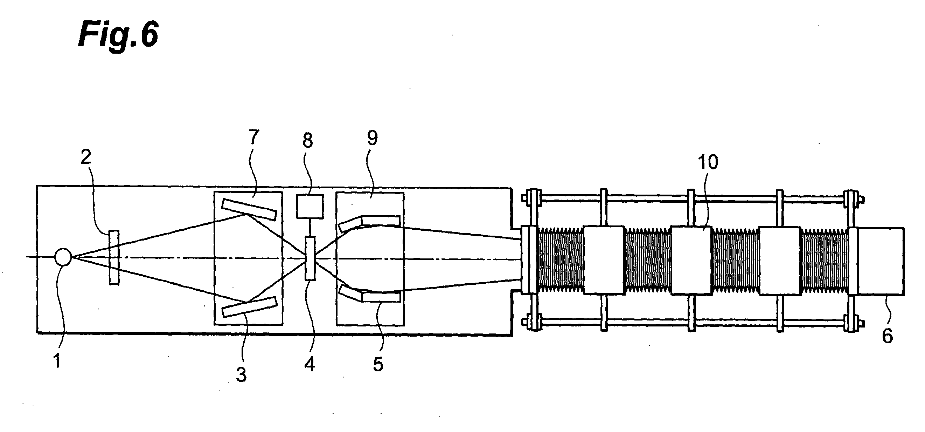

Next, specific operations will be described with reference to Fig. 5 and Fig. 6. Herein, as an example, in the expressions (1) and (2), the design magnification M, the distance a between the sample 4 and the grazing incidence mirror 5, and the distance b between the grazing incidence mirror 5 and the X-ray detector 6 are respectively set to 100, 20mm, and 2000mm. The sample is observed at about 40 times on the side of low magnification, and the sample is observed at about 200 times on the side of high magnification. The position and inclination or the like of the grazing incidence mirror 3 for illumination, the sample 4, and the grazing incidence mirror 5 can be independently adjusted by the moving stages 7, 8 and 9.

When observing at low magnification (for instance, magnification M=about 40 times), the distance a between the sample 4 and the grazing incidence mirror 5 is adjusted by shortening vacuum bellows 14 of the vacuum pipe 10 with the bellows such that the distance b between the grazing incidence mirror 5 and the X-ray detector 6 is set to about 800mm as shown in Fig. 5, and moving the sample 4 by the moving stage 8 so as to be focused while the image of the X-ray detector 6 is observed. The grazing incidence mirror 3 for illumination is moved by the moving stage 7 so as to obtain the optimum illumination.

On the other hand, when observing at high magnification (for instance, magnification M=about 200 times), the distance a between the sample 4 and the grazing incidence mirror 5 is adjusted by extending vacuum bellows 14 of the vacuum pipe 10 with the bellows such that the distance b between the grazing incidence mirror 5 and the X-ray detector 6 is about 4000mm as shown in Fig. 6, and moving the sample 4 by the moving stage 8 so as to be focused while the image of the X-ray detector 6 is observed. The grazing incidence mirror 3 for illumination is moved by the moving stage 7 so as to obtain the optimum illumination.

In the first embodiment, the focusing magnification can be changed without exchanging the grazing incidence mirror 5 by adjusting the distance a between the sample 4 and the grazing e incidence mirror 5, and the distance b between grazing incidence mirror 5 and the X-ray detector 6 in an X-ray microscope which uses the grazing incidence mirror 5 as an objective lens.

The method for moving the grazing incidence mirrors 3 and 5, the sample 4, and the X-ray detector 6 is not limited to the method. Various modifications and transformations can be added to a device having a mechanism which can move them to a target position.

[Second Embodiment]

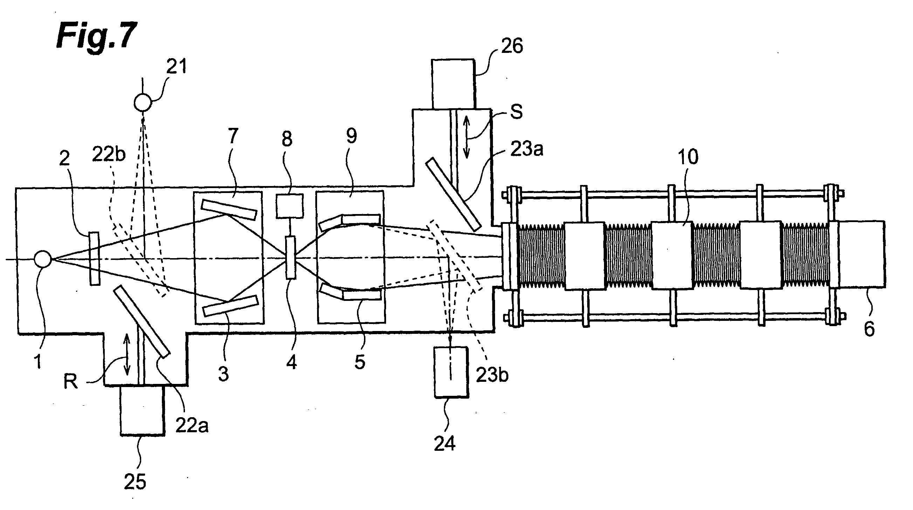

Next, a second embodiment according to the present invention will be described with reference to Fig. 7. In the second embodiment, observation of low magnification for the sample exploration is easily performed by a visible light or the like.

As shown in Fig. 7, the X-ray detector of the second embodiment has a visible light source 21, mirrors 22 and 23 capable of being inserted and retracted in an optical path, liner motion feedthroughs 25 and 26 driving an inserting operation and a retracting operation in the directions of the arrows R and S of the mirrors, and a detector 24 having sensitivity to visible light in addition to the configuration of the first embodiment. In Fig. 7, the mirrors 22a and 23a indicated by solid lines show the state where the mirrors 22a and 23a are retracted from the optical path, and the mirrors 22b and 23b indicated by broken lines show the state where the mirrors 22b and 23b are inserted in the optical path.

Herein, as an example, in the expressions (1) and (2), the design magnification M, the distance a between the sample 4 and the grazing incidence mirror 5, and the distance b between the grazing incidence mirror 5 and the X-ray detector 6 are respectively set to 100, 20mm, and 2000mm.

The mirrors 22a and 23a are respectively inserted to the positions 22b and 23b on the optical axis by driving the liner motion feedthroughs 25 and 26 in the observation of the low magnification (for instance, magnification M=about 40 times) by the visible light for the sample exploration. Next, the visible light source 21 is turned on. The visible light is reflected by the mirror 22, and sample 4 is irradiated by the grazing incidence mirror 3 for illumination. The visible light penetrating through the sample 4 is reflected by the grazing incidence mirror 5. The visible light reflected is then reflected by the mirror 23, and is made incident to the detector 24. The distance between the grazing incidence mirror 5 and the detector 24 through the mirror 23 is set to about 800mm. The distance a between the sample 4 and the grazing incidence mirror 5 is adjusted by moving the sample 4 by the moving stage 8 so as to be focused while viewing the image detected by the detector 24, and the grazing incidence mirror 3 for illumination is moved in the optical axis direction by the moving stage 7 so as to obtain the optimum illumination. The same effect for illumination can be achieved even if the visible light source 21 is moved in the optical axis direction.

The mirrors 22 and 23 are respectively retracted to the positions 22a and 23a by the liner motion feedthroughs 25 and 26 when observing in detail at high magnification by using the X-ray after the desired position of the sample 4 is explored. The distance b between the grazing incidence mirror 5 and the X-ray detector 6 is set to about 2000mm when the magnification M is about 100 times. The X-ray detector 6 is moved such that the distance b between the grazing incidence mirror 5 and the X-ray detector 6 is about 4000mm when the magnification M is about 200 times. The distance a between the sample 4 and the grazing incidence mirror 5 is adjusted by irradiating the X-ray from the X-ray source 1, and moving the sample 4 by the moving stage 8 so as to be focused while observing the image in the X-ray detector 6, and the grazing incidence mirror 3 for illumination is moved in the optical axis direction by the moving stage 7 so as to obtain the optimum illumination.

Since the visible light is also used in addition to the X-ray according to the second embodiment, it is easy to treat and observe in comparison with using only the X-ray. The radiation damage of the sample can be reduced since the visible light is used. In addition, since the sample is observed on only the side of high magnification by the X-ray, the moving distance of the X-ray detector 6 can be reduced.

In the present invention, various variations can be made. For instance, in the observation of high magnification of the example, the X-ray detector 6 is moved by the vacuum pipes 10 with the bellows to adjust the magnification. When it is not necessary to adjust the magnification on the side of high magnification, the position of the X-ray detector 6 may be fixed by the pipe having a fixed length without using the pipes 10 with the bellows. In this case, the grazing incidence mirror 3 for illumination is set at the position in which the optimum illumination is achieved in the observation of high magnification. When the position of the visible light source 21 is set at the position in which the optimum illumination is achieved by the expression (1) in the observation of low magnification using the visible light, it is not necessary to adjust the illumination light at high magnification and low magnification, and the sample can be observed by the simpler procedure.

An ultraviolet rays light source may be used in place of the visible light source. In this case, mirrors for ultraviolet ray are used for the mirrors 22 and 23, and a detector having sensitivity to ultraviolet rays is used for the detector 24.

Another X-ray light source (X-ray irradiation means) than the X-ray source 1 may be set at the position of the visible light source 21. In this case, a multilayer mirror is used for the mirror 22 (a first X-ray reflection means) and the mirror 23 (a second X-ray reflection means), and a detector (an X-ray detecting means) having sensitivity to the X-ray is used for the detector 24. According to the configuration, two X-ray images having different magnifications can be obtained without moving the X-ray detector 6 by using the vacuum pipes 10 with the bellows.

In addition, various transformations and modifications can be made in the first and second embodiments. For instance, a laser plasma X-ray source or synchrotron radiation besides the gas puff type plasma X-ray source as an X-ray source may be used. Though the grazing incidence mirror 3 for illumination which utilizes total reflection and has the form of a rotary ellipsoidal surface is used for the illumination optical system, an grazing incidence mirror having a rotary hyperboloidal surface and a rotary ellipsoidal surface may be used.

As described above, according to the invention, in the X-ray image magnifying device which uses the surface incidence mirror as the objective lens, the focusing magnification can be changed without exchanging the grazing incidence mirror by changing the distance between the sample and the grazing incidence mirror, and the distance between the grazing incidence mirror and the detector.

In addition, the X-ray image magnifying device of the present invention wherein the surface incidence mirror is used as the objective lens has the following three advantages in comparison with using the zone plate optical system. It is not necessary to make the X-ray illuminated with a single wavelength, and the simplified configuration of the illumination optical system can be achieved in comparison with the conventional example using the zone plate optical system. The movement of the sample and the detector is not required since the focal distance f is not changed if the X-ray wavelength is changed in the same magnification and the use efficiency of the X-ray is high. The wavelength which can be observed is not limited to the single wavelength in comparison with using the Schwarzschild type multilayer mirror, and the X-ray image magnifying device can observe in a broad wavelength region (within the range of the visible light to the X-ray).

## Industrial Applicability

The X-ray image magnifying device of the present invention is applicable to a vital observation device and a semiconductor inspection device or the like.

## Claims

**1.** An X-ray image magnifying device comprising:

an illumination optical system for irradiating the X-ray emitted from an X-ray source to a sample;
an objective lens configured by an grazing incidence mirror composed of a rotary hyperboloidal surface and a rotary ellipsoidal surface for magnifying and focusing the X-ray having penetrated through the sample onto a predetermined position;
an X-ray image detecting means for detecting the X-ray image focused by the objective lens; and
a focusing magnification adjusting means for adjusting the focusing magnification of the X-ray image by moving at least one of the X-ray image detecting means, the sample and the illumination optical system along the optical axis direction.

**2.** The X-ray image magnifying device according to claim 1, further comprising;
a light irradiation means for irradiating the sample with a visible light or an ultraviolet light; and
a light detecting means for detecting an image by a light which has penetrated through the sample and has been reflected by the objective lens.

**3.** The X-ray image magnifying device according to claim 1, further comprising:

an X-ray irradiation means containing the X-ray source for irradiating the X-ray;
a first X-ray reflection means for reflecting the X-ray irradiated by the X-ray irradiation means in the optical axis direction of the objective lens to lead the X-ray to the sample;
a second X-ray reflection means for reflecting the X-ray which has penetrated through the sample and has been reflected by the objective lens; and
an X-ray detecting means for detecting an image by the X-ray reflected by the second X-ray reflection means.

## Fig.1

## Fig.2

EP 1 492 129 A1

**Fig.3**

# Fig.4

EP 1 492 129 A1

Fig.5

## Fig.6

**Fig.7**

EP 1 492 129 A1

**Fig.8**

## INTERNATIONAL SEARCH REPORT

| | International application No. |
|---|---|
| | PCT/JP03/03452 |

| A. CLASSIFICATION OF SUBJECT MATTER |
|---|
| Int.Cl⁷ G21K7/00, G01N23/04 |

According to International Patent Classification (IPC) or to both national classification and IPC

| B. FIELDS SEARCHED |
|---|
| Minimum documentation searched (classification system followed by classification symbols)<br>Int.Cl⁷ G21K7/00, G01N23/04 |

Documentation searched other than minimum documentation to the extent that such documents are included in the fields searched

| Jitsuyo Shinan Koho | 1922–1996 | Toroku Jitsuyo Shinan Koho | 1994–2003 |
|---|---|---|---|
| Kokai Jitsuyo Shinan Koho | 1971–2003 | Jitsuyo Shinan Toroku Koho | 1996–2003 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 4-265900 A (Nikon Corp.),<br>22 September, 1992 (22.09.92),<br>Full text; all drawings<br>(Family: none) | 1–3 |
| Y | JP 9-251100 A (Olympus Optical Co., Ltd.),<br>22 September, 1997 (22.09.97),<br>Full text; all drawings<br>(Family: none) | 1–3 |
| Y | JP 9-178900 A (Olympus Optical Co., Ltd.),<br>11 July, 1997 (11.07.97),<br>Full text; all drawings<br>(Family: none) | 1–3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>24 June, 2003 (24.06.03) | Date of mailing of the international search report<br>08 July, 2003 (08.07.03) |
|---|---|
| Name and mailing address of the ISA/<br>Japanese Patent Office | Authorized officer |
| Facsimile No. | Telephone No. |

Form PCT/ISA/210 (second sheet) (July 1998)

14

## INTERNATIONAL SEARCH REPORT

| International application No. |
|---|
| PCT/JP03/03452 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 7-243993 A  (Hamamatsu Photonics Kabushiki Kaisha),<br>19 September, 1995 (19.09.95),<br>Full text; all drawings<br>(Family: none) | 1-3 |

Form PCT/ISA/210 (continuation of second sheet) (July 1998)